# EUROPEAN PATENT SPECIFICATION

(11) **EP 2 435 545 B1**
(45) Date of publication and mention of the grant of the patent: **28.06.2017**
(21) Application number: 10722944.5
(22) Date of filing: 26.05.2010
(51) Int. Cl.: C11B 3/00, A23D 9/007

(54) **OIL COMPOSITIONS**
ÖLZUSAMMENSETZUNGEN
COMPOSITIONS D'HUILE

(30) Priority: 26.05.2009 EP 09006991
(43) Date of publication of application: 04.04.2012
(73) Proprietor: Cargill, Incorporated, Wayzata, MN 55391 (US)
(72) Inventor: HOLLANDER, Frank, NL-4051 BL Ochten (NL); KRUIDENBERG, Marcus, Bemardus, NL-3233 SL Oostvoorne (NL)
(74) Representative: Dottridge, Cass A.C.
(86) International application number: PCT/EP2010/003181
(87) International publication number: WO 2010/136180

(56) References cited:
- WO-A-03/020860
- WO-A-03/052034
- GB-A- 701 631
- US-A- 2 363 672
- US-A1- 2004 210 070
- WILSON ET AL: "Different palm oil preparations reduce plasma cholesterol concentrations and aortic cholesterol accumulation compared to coconut oil in hypercholesterolemic hamsters", JOURNAL OF NUTRITIONAL BIOCHEMISTRY, BUTTERWORTH PUBLISHERS, STONEHAM, GB, vol. 16, no. 10, 1 October 2005 (2005-10-01), pages 633-640, XP005081593, ISSN: 0955-2863
- JESÚS ORTEGA-GARCÍA ET AL: "Refining of high oleic safflower oil: Effect on the sterols and tocopherols content", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 223, no. 6, 28 February 2006 (2006-02-28), pages 775-779, XP019441191, ISSN: 1438-2385

## Description

### Field of the Invention

The present invention relates to a novel oil composition. In particular, the present invention relates to highly stable, additive-free oil compositions and to highly stable, micronutrient enriched compositions.

### Background of the Invention

Crude (or "unrefined") oils and fats are protected from degradation by various naturally occurring antioxidants such as tocopherols. Unfortunately, during the refining process, these naturally occurring antioxidants and other beneficial micronutrients are largely removed. This problem can be exacerbated by modifications (such as fractionation, esterification or hydrogenation) that are used to adapt oils for a particular end use. As a result, fully refined and/or modified oils will have a tendency to become rancid relatively quickly thereby reducing their oxidative stability and shelf-life.

Oil refining typically consists of the following main steps: degumming and/or alkali refining, bleaching and physical refining and/or deodorising. Degumming is carried out, in its most simple form, by mixing the oil with citric or phosphoric acid (or any other food-grade acid) to remove phosphatides and soaps. The bleaching step targets impurities such as metals, trace phosphatides, pigments and peroxides to improve the colour and flavour of the refined oil by contacting the degummed oil with a bleaching earth or clay. Finally, during deodorising, free fatty acids (FFAs) and other volatile impurities are removed by treating (or "stripping") the bleached oil with steam. The deodorised oil is then cooled and stored, ready for use. The deodoriser vapour is also recovered and condensed into a so-called FFA-rich distillate which can be used e.g. for animal feed and other applications.

Deodorisation has traditionally been carried out at temperatures of about 240-260°C. Unfortunately, this results not only in the stripping off of undesirable FFAs but also in the loss of various valuable volatile micronutrients, including antioxidants such as tocopherols.

A number of processes have been developed to address this problem. US5932261 (Global Palm Products), for instance, suggests using a gentler deodorising step (i.e. performed at a lower temperature) to reduce the loss of micronutrients. Unfortunately, this process is not only less efficient for the removal of FFAs, it is also inefficient at reducing carotenoid content, resulting in oils with an undesirable red colour.

Another solution that has been proposed is to actually introduce into the oil some distillate scum recovered from previous refining processes, thereby helping to restore micronutrient levels (see US2363672 from General Mills, for instance). This comes with the obvious disadvantage that one would simultaneously be reintroducing unwanted FFAs and other undesirable impurities. Recent developments (see US2004/0210070 - from Cargill) have therefore focused on separating out, from the deodoriser distillate, two distinct streams: a micronutrient-rich condensate and an FFA-rich condensate. The micronutrient-rich condensate can then be stored and used, as a valuable additive, to increase the antioxidant content of other refined oils.

The drawback to this solution is that the use of such additives must be marked on food labels (as dictated by national laws and regulations) and may be perceived negatively by consumers.

Wilson in Journal of Nutrional Biochemistry Vol 16 No 10, 2005, starting at page 633 describes different palm oils preparations with reduced cholesterol concentrations compared to coconut oil.

US 2004/210070 relates to methods and apparatus for processing vegetable oils and animal fats such as lard, tallow, and fish oil. It may be used to increase yield in oil processing by recovering desirable components from a volatile stream exiting an oil deodorizer.

US 2,363,672 relates to the stabilization of animal and vegetable shortenings to prevent the development of rancidity and oxidation.

WO 03/020860 relates to methods for treating distillates obtained during the process of deodorizing various oils. it relates to methods for recovering fatty acids, tocopherols, and sterols from a distillate obtained from the deodorizing of various oils.

There is therefore a drive by oil manufacturers and food producers to develop refined oils with desirable colour, taste and odour, which have a good oxidative stability but which do not rely on the use of additives.

The present invention addresses these needs.

### Statements of the Invention

According to one aspect of the present invention, there is provided an oil composition according to claim 1.

According to another aspect of the present invention, there is provided a food, feed or beverage composition comprising an oil composition as defined herein.

### Detailed Description

The term "oil composition" as used herein refers to any edible (preferably refined) oil or fat derived, for example, from one or more vegetable and/or animal sources. The term includes both oils and/or fats from a single origin and blends of two or more oils and/or fats from different sources or with different characteristics. Preferably, it will refer to vegetable oils or vegetable oil blends. Examples of suitable vegetable oils include: soybean oil, corn oil, cottonseed oil, palm oil, palm kernel oil, peanut oil, rapeseed oil, safflower oil, sunflower oil, sesame seed oil, rice bran oil, coconut oil, canola oil and any fractions or derivatives thereof.

The term "oil composition" will be used to distinguish an edible or refined oil and/or fat from a crude oil which is an oil and/or fat in its pre-refined, raw state, i.e. as extracted from its original source. Crude oils contain high levels of free fatty acids (FFAs), impurities and/or other contaminants such as pesticides or polyaromatic hydrocarbons (which may cause some food-safety concerns or impart some undesirable colour, taste or odour to the oil). Both the impurities/contaminants and FFAs must be removed before the composition is deemed food-safe.

The term "micronutrient" as used herein refers to any compound (a) which may have some nutritive or beneficial effect for the consumer or for the stability of the oil composition itself, even when used only in very small quantities, and (b) which is naturally present, even if only in trace amounts, in crude oils. Micronutrient levels will typically be expressed in "parts per million" (ppm or mg/kg), with certain micronutrients having established concentrations (see, for example, the Codex standards on oils - www.codexalimentarius.net - which provides established levels of various micronutrients in crude oils and certain maximum permitted levels in refined oils). For the sake of the present invention, we will refer to the micronutrient level in a crude oil as being the industry-established average level of that particular micronutrient in a specific oil type.

Micronutrients of the present invention include tocopherols and tocotrienols.

Tocopherols and tocotrienols are fat-soluble antioxidants associated with a number of health benefits (neurological development, fertility, etc.) thanks to their Vitamin E activity. They both feature a chromanol ring (with a hydroxyl group that can donate a hydrogen atom to reduce free radicals and a hydrophobic side chain which allows for penetration into biological membranes) and both occur in alpha, beta, gamma and delta forms (determined by the number of methyl groups on their chromanol ring). Tocotrienols differ from their analogous tocopherols by the presence of three double bonds in their hydrophobic side chain. Although the various tocopherols and tocotrienols each have a slightly different biological activity, for ease of reference herein, they will all be referred to under the heading of TOCOLS (unless expressly mentioned otherwise).

### Process

In a first step of the process, a crude oil is provided. The crude oil may be a single-origin oil or a blend of oils, as defined above. As part of the process, the crude oil will necessarily be deodorised. Preferably, however, prior to deodorising, it may also be degummed, physically refined, alkali refined and/or bleached. Each of these steps may be carried out on a continuous basis or as batch processes. Preferably, the steps will be continuous.

### • Degumming

Any of a variety of degumming processes known in the art may be used. One such process (known as "water degumming") includes mixing water with the crude oil and separating the resulting mixture into an oil component and an oil-insoluble hydrated phosphatides component, sometimes referred to as "wet gum" or "wet lecithin". Alternatively, phosphatide content can be reduced (or further reduced) by other degumming processes, such as acid degumming, enzymatic degumming (e.g., ENZYMAX from Lurgi) or chemical degumming (e.g., SUPERIUNI degumming from Unilever or TOP degumming from VandeMoortele/Dijkstra CS).

### • Alkali refining

If so desired, crude or degummed oil may be refined via alkali refining. In alkali refining, the oil is commonly mixed with a hot, aqueous alkali solution, producing a mixture of partially refined or "neutral" oil and soapstock. The soapstock is then separated off and the partially refined oil is delivered to the next refining step.

### • Bleaching

The crude or partially refined oil may then be delivered to a bleaching system. The nature and operation of the bleaching system will depend, at least in part, on the nature and quality of the oil being bleached. Generally, the raw or partially refined oil will be mixed with a bleaching agent which combines with oxidation products, trace phosphatides, trace soaps, and other compounds adversely affecting the colour and flavour of the oil. As is known in the art, the nature of the bleaching agent can be selected to match the nature of the crude or partially refined oil to yield a desirable bleached oil. Bleaching agents generally include natural or "activated" bleaching clays, also referred to as "bleaching earths", activated carbon and various silicates. A skilled person will be able to select a suitable bleaching agent from those that are commercially available.

### • Deodorising

The crude, partially refined or bleached oil must undergo a physical refining step referred to as "deodorising". The deodorising process and its many variations and manipulations are well known in the art. Preferably, it will include introducing the oil into a deodoriser and contacting it with steam to vaporize and drive off free fatty acids and other volatile impurities, resulting in a deodorised oil and a vapour stream.

The deodoriser may be any of a wide variety of commercially available deodorizing systems, including both multi-chamber deodorisers (such as those sold by Krupp of Hamburg, Germany; De Smet Group, S.A. of Brussels, Belgium; Gianazza Technology s.r.l. of Legnano, Italy; Alfa Laval AB of Lund, Sweden, or others) and multi-tray deodorisers (such as those sold by Krupp, DeSmet Group, S.A., and Crown Ironworks of the United States).

The deodoriser is desirably maintained at an elevated temperature and a reduced pressure to better volatilise the FFAs and other volatile impurities. The precise temperature and pressure may vary depending on the nature and quality of the oil being processed. The deodoriser will be maintained at a pressure of no greater than 10 mm Hg. Preferably, it will be maintained at a pressure of no greater than 5 mm Hg, e.g., 1-4 mm Hg.

The temperature in the deodoriser may be varied as desired to optimize the yield and quality of the deodorised oil. At higher temperatures, reactions which may degrade the quality of the oil will proceed more quickly. For example, at higher temperatures, cis-fatty acids may be converted into their less desirable trans form. Operating the deodorizer at lower temperatures may minimize the cis-to-trans conversion, but will generally take longer to remove the requisite percentage of volatile impurities. For most vegetable oils, maintaining the oil at a temperature of 200°C or higher should suffice. In many circumstances, an oil temperature of about 230-285°C is suitable, with temperatures of about 240-270°C being useful for many oils.

The deodoriser will be maintained at a pressure of 2-3 mm Hg and the oil will be heated to a temperature of about 260-270°C. Temperatures of about 240-250°C and pressures of about 1-4 mm Hg are appropriate for deodorizing hydrogenated oils and alkali-refined soybean oil, rape oil and sunflower oil. For physical refining of coconut oil or palm kernel oil, temperatures of about 240-245°C and pressures of about 1-4 mm Hg are preferred. Coconut oil which has been alkali refined may be deodorised at a lower temperature of about 200-220°C and at a pressure of about 2-3 mm Hg. The exact temperature and pressure to be used in any given situation will readily be determined by the skilled person.

A quantity of steam is delivered to the deodoriser, e.g. through low-pressure steam lines (at 1-5 Bar for example), and is then sprayed into the oil. As the steam, which may be superheated, bubbles through the oil, it will help strip it of its FFAs and other volatile impurities. The flow rate of steam through the oil will vary depending on the nature and quality of the oil being deodorised and the pressure and temperatures in the deodoriser.

Generally, though, steam flow rates in the order of 0.7-2.5 weight percent (wt. %) of the oil flow rates should suffice for most common processing conditions. This produces a steam- containing vapour stream which is delivered from the deodoriser to one or more condensers.

### • Condensing

Traditionally, the vapour stream would have been condensed into a single deodoriser distillate. The vapour stream will be condensed into at least a micronutrient-rich condensate and one or more other micronutrient-poor condensates or waste streams.

The vapour stream from the deodoriser will be introduced into in a recovery condenser, where it will be partially cooled to an intermediate temperature to preferentially condense the less volatile desired components (and thereby yielding a micronutrient-rich condensate). Most of the more volatile impurities will remain largely in vapour form. The temperature and quench rate of the vapour in the recovery condenser can be controlled to increase recovery of the desired components while minimizing the percentage of impurities passing into the micronutrient-rich condensate.

An intermediate temperature in the order of 50-90% of the initial temperature of the deodorised oil may, for example, be appropriate. Preferably, an intermediate temperature of about 60-80% will be used and, or 70-80%. Alternatively, the intermediate temperature will be about 0-90X lower than the initial temperature, with a temperature differential of about 0-40°C, preferably of about 10-40°C, being useful in many deodorisers. In the process suitable for processing palm oil, the vapor stream is cooled in the recovery condenser to an intermediate temperature of no less than 170°C, e.g. to 170-240X.

The micronutrient-rich condensate will include a substantial fraction, preferably greater than 50%, more preferably greater than 70%, more preferably greater than 80%, more preferably greater than 90% and optimally greater than 95% by weight, of the desirable components (micronutrients) from the vapour stream. At the same time, it should have a relatively minor fraction of any undesirable impurities. Thus, the recovery condenser will yield a relatively impurity-poor micronutrient-rich condensate and a relatively impurity-rich,
micronutrient-poor by-product vapour (which may then be delivered to a by-product condenser for further processing).

### • Blending

The micronutrient-rich condensate, once isolated or separated from the vapour stream, will be blended with the deodorised oil. Preferably, the condensate and the oil will be blended on a continuous basis. In practice, the micronutrient-rich condensate will be recovered and brought into contact with the deodorised oil once the later has exited the deodoriser.

The condensate and oil may be blended using standard oil blending techniques. For example, the condensate may be brought into contact with the deodorised oil via one or more spray heads in fluid communication with a deodorised oil collection vessel. The flow rate of the condensate into the deodorised oil (or the quantity of condensate being blended with the oil) will depend, of course, on the desired end product (namely whether it is desired to produce e.g. a stable but additive-free composition or a micronutrient-enriched composition.

Thus, only enough condensate will be returned to the oil to compensate for micronutrient losses caused by the refining process. For example, if the crude oil contains 1000ppm TOCOLS (the Codex standard states that palm oil, for instance, contains up to 1500 ppm total TOCOLS), then the condensate will be dosed such as to return the level of TOCOLS in the refined oil to approximately 1000ppm.

The condensate will be blended with the deodorised oil such that the resulting composition contains 75-100%, preferably 90-100% by weight of the crude oil micronutrient content. In this embodiment, the micronutrients will only have been temporarily separated from the oil before being blended back. The oil will therefore, and advantageously, not need to be labelled as containing any additives.

As will be seen below, the process may include some additional, final refining steps. Since these may result in a further loss of micronutrient content, it may be desirable to add back more than 100% by weight of the condensate in order, in effect, to "pre-compensate" for these further losses. Alternatively, it may be desirable to blend back more than 100% by weight of the condensate to produce a micronutrient-enriched composition. Such an enriched composition may contain, for example, up to 2500% by weight of the micronutrient content of the crude oil.

### • Further refining

The oil composition obtained by blending the deodorised oil and the micronutrient-rich condensate, as described above, may be used as such. Preferably, however, the process will include one or more further refining steps.

Before returning the temporarily removed condensate to the deodorised oil, it may itself be subjected to further refining steps (e.g. alkali refining, bleaching and/or deodorising, as previously defined). Alternatively, additional refining steps may be performed after blending the oil and the condensate. These additional refining steps will preferably include an FFA-removal step such as a mild deodorising step. The term "mild deodorising" as used herein refers to a deodorising process which is carried out under less severe conditions than the standard deodorising process described above (e.g. for less time and/or at a lower temperature). This will reduce micronutrient losses while ensuring that a minimum level of FFAs and other volatile impurities remain in the final oil composition

Thus, a process for preparing an oil composition according to claim 1, is characterised in that it comprises the steps of:
a) providing at least one crude oil;
b) deodorising said crude oil;
c) recovering from step (b) at least a deodorised oil and a vapour stream;
d) condensing a micronutrient-rich condensate from the vapour stream;
e) blending the micronutrient-rich condensate of step (d) with the deodorised oil of step (c); and
f) deodorising the blend of step (e).

### • Modifications

In addition to the above refining steps, the process may also include one or more modification steps. These may be selected from one or more chemical, physical
or enzymatic modifications or any combination thereof. Preferably, the process will include one or more esterification or interesterification and/or fractionation steps.

Oil modification is generally applied to change the melting and crystallization properties of an oil. Fractionation is used to separate liquid and solid fractions of an oil through crystallization, resulting in two oil products, one with a decreased melting point and one with an increased melting point. Esterification is a process in which fatty acids are either randomly or in a targeted manner exchanged along the glycerol backbone. The exchange can take place between two or more different types of oils or within a single oil in order to randomize the distribution of fatty acids along the glycerol backbone.

The timing of these modifications will of course depend on the desired end composition and the skilled person will be able to determine their preferred order. For example, the oils may be modified before the refining steps, after refining but before blending with the micronutrient-rich condensate, after blending or any combination thereof.

Thus, a process for preparing an oil composition according to claim 1, is characterised in that it comprises the steps of:
a) providing at least one crude oil;
b) deodorising said crude oil;
c) recovering from step (b) at least a deodorised oil and a vapour stream;
d) condensing a micronutrient-rich condensate from the vapour stream;
e) modifying the deodorised oil of step (c); and
f) blending the micronutrient-rich condensate of step (d) with the modified oil of step (e).

The process provides oil compositions which will have good stability, in particular, good oxidative stability (i.e. they will be more resistant to developing rancidity than corresponding oils with lower levels of micronutrients and, in particular, lower levels of TOCOLs). Thus, unlike methods of the prior art (see US2363672 for example), it will not be necessary to use hydrogenation to impart stability. Hydrogenation changes unsaturated fatty acids into saturated fatty acids and is typically used to increase the melting point of an oil. Accordingly, although such a process does not need to (and will preferably not) include a hydrogenation step, such a step may be incorporated by the skilled person, for instance to alter the texture or melting point of the composition.

The process may further include the optional step of mixing in one or more additional oils. This step may be performed at any stage. For example, one or more oils may be mixed to the blend of deodorised oil and condensate. Alternatively, it may be mixed with the deodorised oil before blending with the condensate (either before or after modification if a modification step is included). The one or more additional oils may be crude, partially or fully refined oils or mixtures thereof. The most appropriate oil type and timing of addition will be apparent to the person skilled in the art based on the desired final product.
Products according to claim 1 can be obtained through the above-defined process, with its various possible embodiments They will now be described in more detail.

### Products of the Invention

The present invention provides oil compositions which are additive-free but which still have good oxidative stability, as defined above.

As noted above, the term "oil composition" as used herein refers to an edible oil or oil blend. The term "refined oil" takes its normal meaning in the art, that is to say an oil or oil blend that has undergone a refining process as exemplified above. By definition therefore, a refined oil will be free, or substantially free, of undesirable impurities. FFAs, for example, should be present in the composition in an amount of less than 0.1%, preferably less than 0.05% even more preferably less than 0.01 % by weight.

The compositions will have good oxidative stability without being hydrogenated.

### • Additive-Free Compositions

The term "additive-free" as used herein refers to a composition which does not have to be labelled as containing any additives according to Article 6.4(c) of the EU Food Labelling Directive 2000/13:EC. This states that "constituents of an ingredient which have been temporarily separated during the manufacturing process and later reintroduced but not in excess of their original proportions" do not have to be listed as separate ingredients. Thus, the present invention provides oil compositions containing micronutrients in a proportion which is not in excess of their original concentration in the corresponding crude oil, said micronutrients having not been more than temporarily separated from the oil during processing. For example, the present invention provides a refined oil containing TOCOLS in an amount which is sufficient to ensure oxidative stability but which is not in excess of the corresponding crude oil TOCOL content, said TOCOLS having not been more than temporarily separated from the oil during processing.

The exact micronutrient content will of course depend on the oil composition under consideration. For example, an oil composition derived from coconut oil will have a lower TOCOL content than one derived from palm oil. Indeed, crude coconut oil typically contains only up to 50 ppm total TOCOLS whereas palm oil may contain up to 1500 ppm (see Codex Standard for Named Vegetable Oils - Codex-Stan 210-1999). According to one illustrative embodiment, the oil composition of the present invention will contain between 600 and 1200 ppm TOCOLS.

In any event, a skilled person will readily be able to determine crude micronutrient content and will thereby be able to define the appropriate micronutrient content of the final oil composition.

The oil composition of the present invention may have a micronutrient content of between 75 and 100%, more preferably of between 80 and 100%, more preferably of about 90% by weight of the corresponding crude oil content.

According to the present invention, there is provided an additive-free refined oil composition comprising:
a) one or more micronutrients in a total amount of 600 to 1500 ppm, wherein the micronutrients are TOCOLS; and
b) carotenoids in an amount of less than 1 ppm.

It is indeed an advantage of the present invention that we are able to provide stable, micronutrient-preserved compositions which are relatively free of or low in undesirable compounds (and which do not need to be hydrogenated).

The oil compositions of the present invention, will be, in all other respects, like any other oil or oil blend and can be used in the same way, e.g. for the preparation of food and/or beverage compositions, for feed applications or for industrial or technical uses. Such compositions are therefore also part of the present invention.

### • Food and Beverage Compositions

The products of the present invention may be packaged and sold as such (i.e. as stable, bottled oils) or they may be further blended with one or more other oils or oil compositions and/or with one or more other ingredients, including, if desired, with one or more additives. Where the oil composition of the invention is blended with one or more other oils, these will preferably be deodorised oils and, even more preferably, oil compositions obtainable according to the process previously described.

Such compositions and blends may be used for any desired purpose, e.g. in the food and beverage industry. Thus, according to one particular embodiment, the present invention provides a food and/or beverage composition comprising an oil composition or blend as described above.

The products of the invention may, in particular, be used in bakery products (e.g. cakes, breads, doughs, pastries, batters, etc.), culinary products (e.g. bouillons), frozen products (e.g. pizzas, fries, etc.) or dairy products (e.g. cheese products, yogurts, ice-creams, etc.), in fat-based products per se (such as margarines or frying oils), in infant formulas, nutritional supplements and so on, just like any other oil or oil composition.

The products of the invention may be used to provide or to increase oxidative stability (without the need for hydrogenation) and/or they may be used to improve or supplement the nutritional value of a food, feed and/or beverage composition (e.g. by increasing vitamin content).

## Claims

1. An additive-free refined oil composition having oxidative stability and comprising:
a. One or more micronutrients in a total amount of 600 to 1500 ppm, and
b. Carotenoids in an amount of less than 1 ppm, and wherein the micronutrients are TOCOLS.

2. The composition according to claim 1 wherein FFAs are present in an amount of less than 0.1 %, preferably less than 0.05%, more preferably less than 0.01%.

3. The composition according to anyone of claims 1 to 2 wherein the oil is a vegetable oil selected from the group consisting of palm oil, palm kernel oil, coconut oil, soybean oil, sunflower oil, rapeseed oil, cottonseed oil, rice bran oil, fractions thereof and mixtures thereof, preferably palm oil.

4. A food, feed or beverage composition comprising the oil composition of anyone of claims 1-3.

## Patentansprüche

1. Additiv-freie raffinierte Ölzusammensetzung mit oxidativer Stabilität und umfassend:
a. ein oder mehrere Mikronährstoffe in einer Gesamtmenge von 600 bis 1500 ppm, und
b. Carotenoide in einer Menge von weniger als 1 ppm, und wobei die Mikronährstoffe TOCOLS sind.

2. Zusammensetzung nach Anspruch 1, wobei freie Fettsäuren in einer Menge von weniger als 0,1%, vorzugsweise weniger als 0,05%, bevorzugter weniger als 0,01% vorliegen.

3. Zusammensetzung nach einem der Ansprüche 1 bis 2, wobei das Öl ein Pflanzenöl ist, ausgewählt aus der Gruppe, bestehend aus Palmöl, Palmkernöl, Kokosnussöl, Sojaöl, Sonnenblumenöl, Rapsöl, Baumwollsamenöl, Reiskleieöl, Fraktionen davon und Gemischen davon, vorzugsweise Palmöl.

4. Lebensmittel-, Futter- oder Getränke-Zusammensetzung, umfassend die Ölzusammensetzung nach einem der Ansprüche 1-3.

## Revendications

1. Composition d'huile raffinée sans additif ayant une stabilité à l'oxydation et comprenant:
a. un ou plusieurs micronutriments en une quantité totale de 600 à 1500 ppm, et
b. des caroténoïdes en une quantité inférieure à 1 ppm, et dans laquelle les micronutriments sont des TOCOLS.

2. Composition selon la revendication 1, dans laquelle les AGF sont présents en une quantité inférieure à 0,1 %, de préférence inférieure à 0,05 %, de préférence encore inférieure à 0,01 %.

3. Composition selon l'une quelconque des revendications 1 à 2, dans laquelle l'huile est une huile végétale choisie dans le groupe constitué par l'huile de palme, l'huile de noix de palme, l'huile de noix de coco, l'huile de soja, l'huile de tournesol, l'huile de colza, l'huile de graine de coton, l'huile de son de riz , des fractions de celles-ci et leurs mélanges, de préférence l'huile de palme.

4. Composition alimentaire, alimentaire pour animaux ou buvable comprenant la composition d'huile selon l'une quelconque des revendications 1 à 3.
